# EUROPEAN PATENT SPECIFICATION

(11) **EP 0 522 684 B1**
(45) Date of publication and mention of the grant of the patent: **19.06.1996**
(21) Application number: 92303912.7
(22) Date of filing: 30.04.1992
(51) Int. Cl.: B30B 9/00, G02F 1/1333, B30B 15/06, B30B 15/30

(54) **Press apparatus used for manufacturing a liquid crystal panel**
Presse zur Herstellung einer Flüssigkristalltafel
Presse pour la fabrication d'un panneau à cristal liquide

(30) Priority: 12.07.1991 JP 198367/91; 12.07.1991 JP 62483/91 U
(43) Date of publication of application: 13.01.1993
(73) Proprietor: SINTOKOGIO LTD., Nakamura-ku Nagoya (JP)
(72) Inventor: Ohta, Kazuhiro, Goyucho, Toyokawa-shi (JP); Uchimura, Shoji, Nagoya-shi (JP); Takagi, Sigeyuki, Toyohashi-shi (JP); Furukawa, Kyoji, Toyokawa-shi (JP)
(74) Representative: Godwin, Edgar James

(56) References cited:
- EP-A- 0 218 914
- WO-A-90/11173
- JP-A- 3 150 527
- Patent Abstracts of Japan vol. 12, no. 182(M-702) 27 May 1988 & JP-A-62 292 300(MEIKI CO) 18 December 1987
- Patent Abstracts of Japan vol. 14,no. 405(P-1100) 31 August 19980 & JP-A- 02 157 719 (CHOKAI KEIICHI) 18 June 1990

## Description

The present invention relates to a press apparatus for use in manufacturing a liquid crystal panel which comprises upper and lower glass substrates with transparent electrodes formed thereon, the liquid crystal cell having a predetermined gap between the two glass substrates. The peripheral portion of the liquid crystal cell is sealed by sealing resin.

In the conventional liquid crystal panel manufactured in the manner described above, a non-uniform gap between the glass substrates causes irregularity of the color of the liquid crystal panel. Hence, the gap must be made uniform over the entirety of the glass substrates. To achieve this, spherical beads having the same diameter may be scattered between the glass substrates. As the glass substrate is very thin, non-uniform pressing thereof thus forms a curved portion which precludes sharp display. Since such glass substrates with the transparent electrodes formed thereon are expensive and since they must be discarded if a uniform gap is not obtained therebetween, improvement of the yield has been desired. Uniform pressing requires not only parallelism between the glass substrates but also between the pressure-exerting plate and the pressure-receiving plate of a press apparatus for pressing the glass substrates.

JP-A-03 150 527, which belongs to the same applicant, discloses a liquid panel manufacturing apparatus according to the preamble of claim 1, wherein a pressure transmission plate is connected to the top end of a press shaft which is coupled to a press drive mechanism composed of a motor driven servo-motor, for generating a press force, through the intermediary of a ball-and-screw mechanism so as to be movable up and down, a movable plate is mounted to the upper part of the pressure transmission plate through the intermediary of inclination compensating mechanism composed of three load-cells which are located at three apexes of a regular triangle as view in a plan view, each of the load cells being attached at its top end with a piezoelectric element interposed between electrodes and adapted to be slightly reciprocated, a press plate incorporating a heater is attached to the top of the movable plate, a stationary plate attached at its lower surface with a back-up plate is arranged above the press plate, and the motor-driven servo-motor and the load cells are electrically controlled by a controller composed of a microcomputer. However, the heater incorporated in the press plate cannot be precisely controlled, which is a disadvantage.

It would be desirable to be able to mitigate or overcome this disadvantage.

Accordingly, the present invention provides a press apparatus for use in manufacturing a liquid crystal panel, including a pressure-exerting plate and a pressure-receiving plate, for applying pressure to upper and lower glass substrates of a liquid crystal panel when located between the said plates, the apparatus comprising three load cells for supporting one of the said plates, the load cells being disposed at positions corresponding to vertexes of a triangle, in plan view, to enable detection of the degree of parallelism of the said plates, while the press apparatus is applying pressure to the glass substrates, characterised in that the pressure-exerting plate or the pressure-receiving plate comprises a ceramic plate and a metallic plate which incorporates a heating device.

According to one specific form of the present invention, in a plan view the pressing operation is performed while the differences between the loads of the load cells are electrically checked. The load applied to each of the load cells is monitored by the CRT display so as to determine whether the glass substrate is placed at an incorrect position or whether replacement of the glass substrate is necessary. It is thus possible to greatly improve yield of the manufacture of liquid crystal panels.

### BRIEF DESCRIPTION OF THE DRAWINGS

Fig. 1 is a front view illustrating an embodiment of the present invention;
Fig. 2 is a schematic view illustrating a pressure-receiving plate or a pressure-exerting plate;
Fig. 3 is a block diagram showing an electric configuration for controlling heating of the pressure-receiving plate or the pressure-exerting plate; and
Fig. 4 is a cross-sectional view of a liquid crystal panel which is pressed by the press machine shown in Fig. 1.

### DETAILED DESCRIPTION OF THE PREFERRED EMBODIMENT

An embodiment of the present invention will be described below with reference to the accompanying drawings. A base plate 2 is fixed to an upper portion of a base 1, and a pole 3 is provided at each of four corners of the base plate 2. A fixed plate 4 with a pressure-receiving plate 4A mounted on an undersurface thereof through a temperature insulating plate 17 is fixed to the upper ends of the poles 3.

A pressure transmitting plate 5 is fitted to the poles 3 through sleeves 6 in such a manner as to be movable up and down. A movable plate 7 with a pressure-exerting plate 7A fixed to the upper surface thereof through a temperature insulating plate 18 is supported by three load cells 8A, 8B and 8C disposed on the upper surface of the pressure-transmitting plate 5 at positions corresponding to the vertexes of an equilateral triangle, as viewed from above.

A housing 9 is fixed to the base 1, and an electric servo motor 10 is mounted on the upper surface of the housing 9 in such a manner that an output shaft thereof is directed downward.

A pressing shaft 11 whose proximal end has a ball nut structure passes through the housing 9 in such a manner as to be slidable along the upper surface of the housing 9. The ball nut structure (not shown) of the pressing shaft 11 engages with a ball screw (not shown) supported in a vertical direction within the housing 9, by which rotation of the rotary shaft (not shown) of the servo motor 10 is transmitted to the pressing shaft 11. The pressure-transmitting plate 5 is horizontally fixed to the upper end of the pressing shaft 11 through a bracket 16.

The load cells 8A, 8B and 8C are electrically connected to a controller 12 which is a microcomputer through amplifiers 13A, 13B and 13C and an A/D converter 14. The controller 12 converts the A/D-converted signals from the load cells 8A, 8B and 8C into actual loads, and calculates differences between the individual loads of the load cells 8A, 8B and 8C. When the obtained differences are larger than the values which are set using the set values in the microcomputer, it is determined that the applied loads are not uniform, and this abnormality is informed to the worker by means of a buzzer or the like.

A CRT display 15 is electrically connected to the controller 12 so as to allow the load applied to each of the load cells 8A, 8B and 8C to be monitored. Consequently, it is possible to determine how the loads applied to the load cells are unbalanced. This in turn makes determination possible as to whether or not the liquid crystal panel 37 is set at the normal position of the pressure-exerting plate 7A or as to whether or not the upper and lower glass substrates 31A, 31B of the liquid crystal panel 37 have a failure.

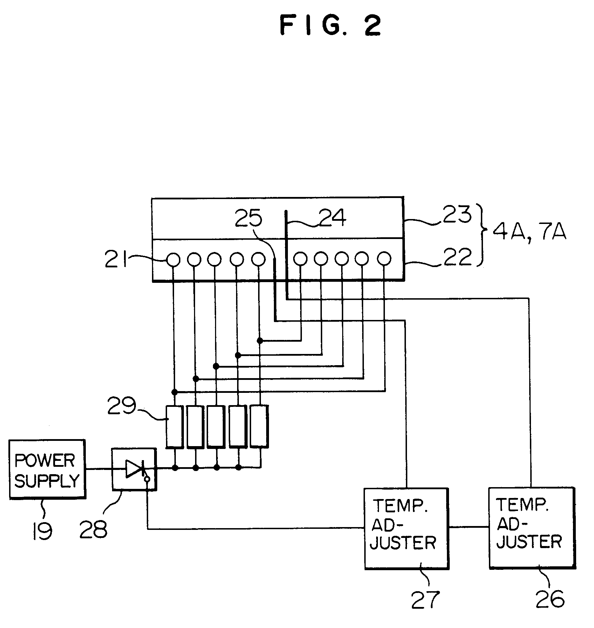

The inner structure of the pressure-receiving plate 4A and pressure-exerting plate 7A will be described in detail below with reference to Fig. 2. Since the inner structure of the pressure-receiving plate 4A and that of the pressure-exerting plate 7A are substantially the same, only the pressure-exerting plate 7A will be described in detail.

The pressure-receiving plate 4A is made up of a metallic heating plate 22 and a ceramic plate 23 fixed to the surface of the heating plate 22. Thermocouples 24 and 25 are embedded in the ceramic plate 23 and the metallic heating plate 22, respectively. The thermocouple 24 detects the temperature near the surface of the ceramic plate 23. The thermocouple 25 detects the temperature near heaters 21 of the heating plate 22.

The thermocouples 24 and 25 are electrically connected to a temperature adjuster 26 for the ceramic plate 23 and a temperature adjuster 27 for the heating plate 22, respectively. The output terminal of the temperature adjuster 26 for the ceramic plate 23 is electrically connected to a remote input terminal of the temperature adjuster 27 for the heating plate 22.

The output terminal of the temperature adjuster 27 for the heating plate 22 is connected to a thyristor 28 for supplying electric power to the heaters 21 from a power supply 19.

The thyristor 28 is connected to heaters 21 through power adjusters 29 corresponding to the heaters 21.

In the pressure-receiving plate 4A or pressure-exerting plate 7A arranged in the manner described above, the metallic heating plate 22 and the ceramic plate 23 are heated by supplying power to the heaters 21. At that time, the temperature of the surface portion of the ceramic plate 23 is measured by the thermocouple 24. The measured value is input to the temperature adjuster 26 which performs PID operation using a difference between the measured value and a first set value, and calculates the output. The output of the temperature adjuster 26 (which is made between 0 and 100%) is input to the remote input terminal of the temperature adjuster 27. The temperature adjuster 27 calculates the second set value of the temperature of the plate using the arithmetic expression determined beforehand by the second set value of the temperature adjuster 27. If the output of the PID operation is 0%, 180°C is set as the second set value. If the output of the PID operation is 50%, 190°C is set as the second set value. If the output of the PID operation is 100%, 200°C is set as the second set value. The temperature adjuster 27 performs PID operation using this second set value and the temperature value of the heating plate 22 which is detected by the thermocouple 25, and controls the thyristor 28 and hence the heaters 21 on the basis of the output thereof. It is therefore possible to accurately and stably set the surface temperature of the ceramic plate 23 to a predetermined desired temperature.

The operation of the press apparatus arranged in the manner described above will be described below.

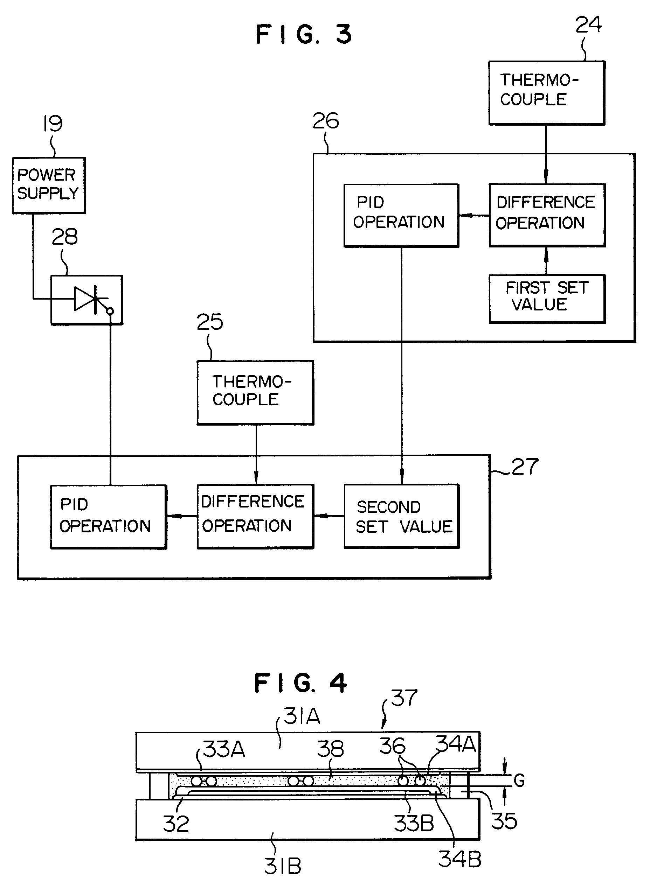

First, the liquid crystal panel 37 pressed by the aforementioned press apparatus will be described with reference to Fig. 4.

As shown in Fig. 4, a color filter 32 is provided on the inner surface of the lower glass substrate 31B, and a transparent electrodes 33A, 33B disposed on the inner surface of the upper glass substrate 31A and the color filter 32. Orienting films 34A, 34B are coated on each of the transparent electrodes 33A, 33B. A gap of liquid crystal cell 38 between the orienting films 34A, 34B i.e., gap G, must be uniform over the entire orienting films 34A, 34B. Hence, the glass substrates 31A, 31B must be uniformly pressed between the pressure-receiving plate 4A and pressure-exerting plate 7A while a sealing resin 35 provided around the liquid crystal cell 38 is being melted by the aforementioned heaters. In Fig. 4, reference numerals 36 denotes spacers disposed to obtain gap G, which may be spherical beads.

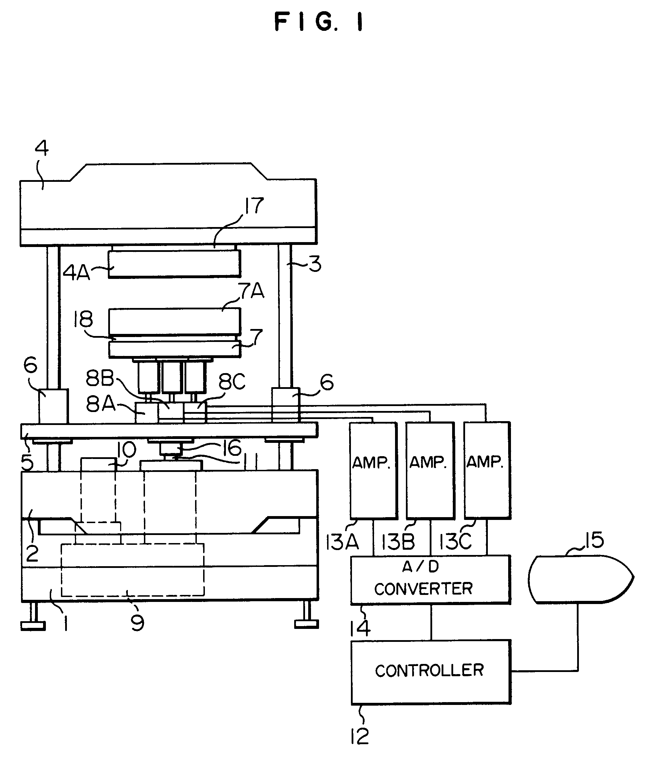

In the state shown in Fig. 1, a liquid crystal panel 37 is placed on the pressure-exerting plate 7A. Next, an electric current is supplied to the heaters 21 incorporated in the pressure-receiving plate 4A and the pressure-exerting plate 7A to accurately heat the pressure-receiving plate 4A and the pressure-exerting plate 7A up to predetermined temperatures in the manner described above. Concurrently with this, the servo motor 10 is activated to apply a predetermined amount of pressure to the two glass substrates 31A, 31B and pressure-receiving plate 4A through the pressure-exerting plate 7A for a predetermine period of time.

When the two glass substrates 31A, 31B are pressurized for a predetermined period of time while they are heated to a predetermined temperature in the manner described above, the sealing resin 35 is heated and melted and then set, thus a liquid crystal panel 37 with no liquid crystal is obtained.

At that time, the controller 12 calculates differences between the loads of the load cells 8A, 8B and 8C. When the obtained differences are larger than the preset values, it is determined that the loads are not applied uniformly due to, for example, deviation of the liquid crystal panel 37 from the fixed position, and the controller 12 sends a signal to a buzzer (not shown) to warn the worker of abnormality. At this time, the CRT display is monitoring the load applied to each of the load cells. Therefore, it is possible to check whether the abnormality is caused by positional deviation or abnormality of the glass substrate.

In order to simulate the application of unequal pressure, the liquid crystal panel 37 was set on the pressure exerting-plate 7A with the center thereof being shifted from the center of the pressure exerting-plate 7A by 1 mm. In this case, the difference between specific two of the loads detected by the load cells 8A, 8B and 8C, exceeded 100 kg.

### REFERENCE EXAMPLE 1

Experiment was made with a liquid crystal panel having a size of 330 mm x 330 mm with the use of the press apparatus shown in Fig. 1 under the following conditions:

| | |
|---|---|
| size of pressure exerting and receiving plates: | 380 mm x 380 mm |
| maximum applied force: | 3 ton |
| stroke speed: | 8 mm/sec |
| applied pressure range: | 0.5 to 2.8 kg/cm² |
| maximum heating temp.: | 200 deg. C |

First, with nothing being set on the pressure exerting plate, the pressure exerting plate was made into press-contact with the pressure receiving plate under a certain force, for example, 1.5 ton, and then the load cells 8A, 8B, 8C were adjusted in order that they give read values which are equal to each other, that is, for example, 500 kg.

Next, the liquid crystal panel was set on the pressure exerting plate, the centers thereof being aligned with each other, and was then pressed against the pressure receiving plate by raising the pressure exerting plate under the conditions listed above. That is, the pressure applied to the glass surfaces of the liquid crystal panel was maintained in a range from 1 to 2.7 kg/cm². Differences between each two of applied forces detected by the load cells 8A, 8B, 8C were within a range of 50 to 100 kg. Accordingly, it was ensured that if the difference between each two of the applied loads falls within the range of 50 to 100 kg, the glass substrates of the liquid crystal panel can be pressed uniformly over their entire surfaces.

### REFERENCE EXAMPLE 2

Similar experiment was made with a liquid crystal panel having a size of 450 mm x 330 mm under the following conditions:

| | |
|---|---|
| size of the pressure exerting and receiving plates: | 500 mm x 380 mm |
| maximum applied force: | 3 ton |
| applied pressure range: | 0.5 to 2.0 kg/cm² |
| stroke speed: | 8 mm/sec |
| maximum heating temp.: | 200 deg. C |

Similar results as mentioned in the above-mentioned reference example 1 were obtained.

### REFERENCE EXAMPLE 3

Similar experiment was made with a liquid crystal panel having a size of 500 mm x 400 mm under the following conditions:

| | |
|---|---|
| size of pressure exerting and receiving plates: | 550 mm x 450 mm |
| maximum applied force: | 5 ton |
| applied pressure range: | 0.5 to 2.5 kg/cm² |
| stroke speed: | 8 mm/sec |
| maximum heating temp.: | 200 deg. C |

Similar results as mentioned in the above-mentioned reference example 1 were obtained.

From the above-mentioned experiments, it was found that liquid crystal panels can be suitably pressed by a pressure in a range of 0.5 to 3 kg/cm² with a difference between each two of loads detected by the load cells 8A, 8B, 8C being within a range of 50 to 100 kg.

## Claims

1. A press apparatus for use in manufacturing a liquid crystal panel, including a pressure exerting plate (7A) and a pressure-receiving plate (4A), for applying pressure to upper and lower glass substrates (31A,31B) of a liquid crystal panel (37) when located between the said plates (4A, 7A), the apparatus comprising three load cells (8A,8B,8C) for supporting one of the said plates (4A, 7A), the load cells being disposed at positions corresponding to vertexes of a triangle, in plan view, to enable detection of the degree of parallelism of the said plates (4A, 7A), while the press apparatus is applying pressure to the glass substrates (31A,31B), characterised in that the pressure-exerting plate (7A) or the pressure-receiving plate (4A) comprises a ceramic plate (23) and a metallic plate (22) which incorporates a heating device (21).

2. A press apparatus according to claim 1, including a pressing shaft (11) which is movable up and down, preferably by means of an electric servo motor (10), and a pressure-transmitting plate (5) fixed to an end portion of the pressing shaft (11), the pressure-exerting plate (7A) being mounted on the pressure-transmitting plate (5) via the three load cells (8A,8B,8C).

3. A press apparatus according to claim 2, wherein a movable plate (7) is disposed between the pressure-exerting plate (7A) and the three load cells (8A,8B,8C), and wherein the pressure-receiving plate (4A) is mounted on a fixed plate (4).

4. A press apparatus according to claim 2 or 3, wherein the pressure-transmitting plate (5) is mounted on pole means (3) via sleeve means (6) for slidable movement along the pole means (3), and the pressure-receiving plate (4A) is connected to an end portion of the pole means (3).

5. A press apparatus according to any preceding claim, wherein a first thermocouple (24) is embedded in the ceramic plate (23) and a second thermocouple (25) is embedded in the metallic plate (22), energization of the heating device (21) being controlled in accordance with temperature detection signals from the thermocouples (24,25).

6. A press apparatus according to claim 5, wherein the first thermocouple (24) is disposed such that it can detect a temperature of a surface portion of the ceramic plate (23) and the second thermocouple (24) is disposed such that it can detect a temperature of a portion of the metallic plate (22) which is located near the heating device (21), the heating device (21) being connected to a power source (19) through a thyristor (28) which is controlled on the basis of a value obtained by performing a given operation on a difference signal between the signal from the second thermocouple (25) and a value obtained by performing a predetermined operation on a difference signal value between the signal from the first thermocouple (24) and a predetermined value.

7. A press apparatus according to claim 6, wherein the said predetermined operation includes a PID operation.

8. A press apparatus according to claim 6 or 7, wherein the heating device comprises a plurality of heaters (21) each of which is connected to the thyristor (28) through a power adjuster (29).

9. A press apparatus according to any preceding claim, including computing means for calculating differences between load detection signals from the three load cells (8A,8B,8C), and detection means for determining whether at least one of the differences exceeds a predetermined value.

10. A press apparatus according to claim 9, including an A/D converter (14) for converting the analog signals from the three load cells (8A,8B,8C) to digital signals which are received by the computing means.

11. A press apparatus according to any preceding claim, including a CRT display (15) for monitoring the load applied to each of the three load cells (8A,8B,8C).

## Patentansprüche

1. Pressenvorrichtung zur Verwendung bei der Herstellung eines Flüssigkristallfeldes, mit einer Druckausübungsplatte (7A) und einer Druckaufnahmeplatte (4A) zum Aufbringen von Druck auf ein oberes und ein unteres Glassubstrat (31A, 31B) eines Flüssigkristallfeldes (37), wenn sich diese zwischen den Platten (4A, 7A) befinden, wobei die Vorrichtung drei Kraftmeßzellen (8A, 8B, 8C) zum Haltern einer der Platten (4A, 7A) aufweist, und die Kraftmeßzellen an Orten entsprechend Spitzen eines Dreiecks in der Aufsicht angeordnet sind, um eine Erfassung des Parallelitätsgrades der Platten (4A, 7A) zu ermöglichen, während die Pressenvorrichtung Druck auf die Glassubstrate (31A, 31B) ausübt,
**dadurch gekennzeichnet**, **daß** die Druckausübungsplatte (7A) oder die Druckaufnahmeplatte (4A) eine Keramikplatte (23) und einen Metallplatte (22) aufweist, in welcher eine Heizvorrichtung (21) vorgesehen ist.

2. Pressenvorrichtung nach Anspruch 1, mit einer Pressenwelle (11), die nach oben und unten beweglich ist, vorzugsweise durch einen elektrischen Servomotor (10), und mit einer Druckübertragungsplatte (5), die an einem Endabschnitt der Pressenwelle (11) befestigt ist, wobei die Druckausübungsplatte (7A) auf der Druckübertragungsplatte (5) über die drei Kraftmeßzellen (8A, 8B, 8C) angebracht ist.

3. Pressenvorrichtung nach Anspruch 2, bei welcher eine bewegliche Platte (7) zwischen der Druckausübungsplatte (7A) und den drei Kraftmeßzellen (8A, 8B, 8C) angeordnet ist, und bei welcher die Druckaufnahmeplatte (4A) auf einer festen Platte (4) angebracht ist.

4. Pressenvorrichtung nach Anspruch 2 oder 3, bei welcher die Druckübertragungsplatte (5) auf einer Stangenvorrichtung (3) über eine Buchsenvorrichtung (6) zur Erzielung einer Gleitbewegung entlang der Stangenvorrichtung (3) angebracht ist, und die Druckaufnahmeplatte (4A) mit einem Endabschnitt der Stangenvorrichtung (3) verbunden ist.

5. Pressenvorrichtung nach einem der voranstehenden Ansprüche, bei welcher ein erstes Thermoelement (24) in der Keramikplatte (23) eingebettet ist, und ein zweites Thermoelement (25) in der Metallplatte (22) eingebettet ist, und eine Energieversorgung der Heizvorrichtung (21) entsprechend Temperaturerfassungssignalen von den Thermoelementen (24, 25) gesteuert wird.

6. Pressenvorrichtung nach Anspruch 5, bei welcher das erste Thermoelement (24) so angeordnet ist, daß es die Temperatur eines Oberflächenabschnitts der Keramikplatte (23) erfassen kann, und das zweite Thermoelement (24) so angeordnet ist, daß es die Temperatur eines Abschnitts der Metallplatte (22) erfassen kann, der sich nahe an der Heizvorrichtung (21) befindet, wobei die Heizvorrichtung (21) an eine Stromquelle (19) über einen Thyristor (28) angeschlossen ist, der gesteuert wird auf der Grundlage eines Wertes, der durch Durchführung einer vorbestimmten Operation mit einem Differenzsignal zwischen dem Signal von dem zweiten Thermoelement (25) und einem Wert erhalten wird, der durch Durchführung einer vorbestimmten Operation mit einem Differenzsignalwert zwischen dem Signal von dem ersten Thermoelement (24) und einem vorbestimmten Wert erhalten wird.

7. Pressenvorrichtung nach Anspruch 6, bei welcher die vorbestimmte Operation eine PID-Operation enthält.

8. Pressenvorrichtung nach Anspruch 6 oder 7, bei welcher die Heizvorrichtung mehrere Heizeinrichtungen (21) aufweist, von denen jede über eine Leistungseinstellvorrichtung (29) an den Thyristor (28) angeschlossen ist.

9. Pressenvorrichtung nach einem der voranstehenden Ansprüche, mit einer Berechnungsvorrichtung zur Berechnung von Differenzen zwischen Belastungserfassungssignalen von den drei Kraftmeßzellen (8A, 8B, 8C) und einer Erfassungsvorrichtung zur Festlegung, ob zumindest eine der Differenzen einen vorbestimmten Wert überschreitet.

10. Pressenvorrichtung nach Anspruch 9, mit einem A/D-Wandler (14) zum Umwandeln der Analogsignale von den drei Kraftmeßzellen (8A, 8B, 8C) in Digitalsignale, die von der Berechnungsvorrichtung empfangen werden.

11. Pressenvorrichtung nach einem der voranstehenden Ansprüche, mit einer Kathodenstrahlröhrenanzeige (15) zur Überwachung der auf jede der drei Kraftmeßzellen (8A, 8B, 8C) einwirkenden Belastung.

## Revendications

1. Presse pour utilisation dans la fabrication d'un panneau à cristal liquide, comprenant une plaque exerçant une pression (7A) et une plaque de réception de pression (4A), pour appliquer une pression aux substrats de verre supérieur et inférieur (31A, 31B) d'un panneau à cristal liquide (37) lorsqu'ils sont situés entre lesdites plaques (4A, 7A), la presse comprenant trois boîtes dynamométriques (8A, 8B, 8C) destinées à supporter l'une desdites plaques (4A, 7A), les boîtes dynamométriques étant disposées dans des positions correspondant aux sommets d'un triangle, en vue plane, pour permettre une détection du degré de parallélisme desdites plaques (4A, 7A), tandis que la presse exerce une pression sur les substrats de verre (31A, 31B), caractérisée en ce que la plaque exerçant la pression (7A) ou la plaque de réception de la pression (4A) comprend une plaque de céramique (23) et une plaque métallique (22), laquelle incorpore un dispositif de chauffage (21).

2. Presse selon la revendication 1, comprenant un arbre de pression (11) qui est mobile vers le haut et vers le bas, de préférence à l'aide d'un servo-moteur électrique (10), et une plaque de transmission de la pression (5) fixée à une partie d'extrémité de l'arbre de pression (11), la plaque exerçant la pression (7A) étant montée sur la plaque de transmission de la pression (5) par l'intermédiaire des trois boîtes dynamométriques (8A, 8B, 8C).

3. Presse selon la revendication 2, dans laquelle une plaque mobile (7) est disposée entre la plaque exerçant la pression (7A) et les trois boîtes dynamométriques (8A, 8B, 8C), et dans laquelle la plaque de réception de la pression (4A) est montée sur une plaque fixe (4).

4. Presse selon la revendication 2 ou 3, dans laquelle la plaque de transmission de la pression (5) est montée sur des moyens de montant (3) par l'intermédiaire de moyens de manchon (6) permettant un mouvement de coulissement le long des moyens de montant (3), et la plaque de réception de la pression (4A) est connectée à une partie d'extrémité des moyens de montant (3).

5. Presse selon l'une quelconque des revendications précédentes, dans laquelle un premier thermocouple (24) est noyé dans la plaque de céramique (23) et un second thermocouple (25) est noyé dans la plaque métallique (22), une activation du dispositif de chauffage (21) étant commandée en conformité avec les signaux de détection de température provenant des thermocouples (24, 25).

6. Presse selon la revendication 5, dans laquelle le premier thermocouple (24) est disposé de telle sorte qu'il peut détecter une température d'une partie de surface de la plaque de céramique (23) et le second thermocouple (25) est disposé de telle sorte qu'il peut détecter une température d'une partie de la plaque métallique (22) qui est située près du dispositif de chauffage (21), le dispositif de chauffage (21) étant connecté à une source électrique (19) par l'intermédiaire d'un thyristor (28) qui est commandé sur la base d'une valeur obtenue en effectuant une opération donnée sur un signal de différence entre le signal provenant du second thermocouple (25) et une valeur obtenue en effectuant une opération prédéterminée sur une valeur de signal de différence entre le signal provenant du premier thermocouple (24) et une valeur prédéterminée.

7. Presse selon la revendication 6, dans laquelle ladite opération prédéterminée inclut une opération PID.

8. Presse selon la revendication 6 ou 7, dans laquelle le dispositif de chauffage comprend une pluralité d'éléments de chauffage (21) dont chacun est connecté au thyristor (28) par l'intermédiaire d'un dispositif de réglage électrique (29).

9. Presse selon l'une quelconque des revendications précédentes , comprenant des moyens de calcul prévus pour calculer des différences entre des signaux de détection de charge provenant des trois boîtes dynamométriques (8A, 8B, 8C), et des moyens de détection prévus pour déterminer si au moins une des différences dépasse une valeur prédéterminée.

10. Presse selon la revendication 9, comprenant un convertisseur analogique-numérique (14) pour convertir les signaux analogiques provenant des trois boîtes dynanométriques (8A, 8B, 8C) en signaux numériques qui sont reçus par les moyens de calcul.

11. Presse selon l'une quelconque des revendications précédentes, comprenant un affichage par tube à rayons cathodiques (15) destiné à surveiller la charge appliquée à chacune des trois boîtes dynamométriques (8A, 8B, 8C).
